# EUROPEAN PATENT APPLICATION

(11) **EP 2 819 071 A1**
(43) Date of publication of application: **31.12.2014**
(21) Application number: 14001773.2
(22) Date of filing: 20.05.2014
(51) Int. Cl.: G06Q 10/06

(54) **Systems and methods for displaying and analyzing employee history data**

(30) Priority: 27.06.2013 US 201313929575
(71) Applicant: Successfactors, Inc., South San Francisco, CA 94080 (US)
(72) Inventor: Xu, Kai, South SAN Francisco, CA 94080 (US); Capraro, Michelangelo, South SAN Francisco, CA 94080 (US)
(74) Representative: Müller-Boré & Partner Patentanwälte PartG mbB

(57) **Abstract**

The present disclosure includes systems and methods for displaying and analyzing employee history data. In one embodiment employee data is accessed from a data store. The employee data comprises one or more employee metrics at a plurality of time points. A graphical component representing an employee is displayed. The graphical component is animated across a timeline from a first time point to a second time point and a trail is generated across the timeline showing the movement of the graphical component over time. Employee metrics may be indicated at a plurality of time points.

## Description

### BACKGROUND

The present invention relates to computing and data processing, and in particular, to systems and methods for displaying and analyzing employee history data.

The growth in computing power and mobility has placed almost unlimited amounts of data in the hands of users. Cloud computing systems and software as a service remove hardware and software complexities to data centers. Users access powerful backend data processing resources through home computers, laptops, mobile devices such as smartphones and tablets computers, and other emerging portable computing technologies. However, it is ever problematic to provide users with interfaces to data that make data easy to access and manipulate. As computational power increases and computing become ubiquitous, innovative user interface solutions are required that are engaging to the user, intuitive, and easy to manipulate.

One particular problem facing many organizations is the management of sometimes massive amounts of data pertaining to employees.

### SUMMARY

Embodiments of the present disclosure provide systems and methods for displaying and analyzing employee data. In one embodiment, the present invention includes a method comprising accessing, by a computing device, employee data, wherein the employee data comprises one or more employee metrics at a plurality of time points and displaying, by the computing device, a graphical component representing an employee, said displaying comprising animating the graphical component across a timeline from a first time point to a second time point, wherein said animating displays a trail across the timeline showing the movement of the graphical component over time, and wherein at least one employee metric is indicated at a plurality of time points.

In one embodiment, the trail comprises a plurality of images of the graphical component at a plurality of time points between the first time point and the second time point.

In one embodiment, the graphical component changes position based on a value of the at least one metric.

In one embodiment, the graphical component changes position along a first axis based on the value of the at least one metric and the graphical component changes position along a second axis based on a value of a second metric.

In one embodiment, the at least one employee metric is displayed in an annotation associated with the graphical component at the plurality of time points.

In one embodiment, the displaying comprises displaying multiple graphical components each representing a different employee.

In one embodiment, a selection from a user of a point on said trail is received and processed, and in accordance therewith, employee data is displayed for a time point corresponding to the point on said trail selected by the user.

In another embodiment, the present disclosure includes a computer system comprising a processor and a non-transitory computer readable medium having stored thereon one or more programs, which when executed by the processor, causes the processor to perform the techniques set forth herein.

In another embodiment, the present disclosure includes a non-transitory computer readable storage medium storing one or more programs, the one or more programs comprising instructions for performing the techniques set forth herein.

The following detailed description and accompanying drawings provide a better understanding of the nature and advantages of the present disclosure.

### BRIEF DESCRIPTION OF THE DRAWINGS

Fig. 1 illustrates displaying talent history according to one embodiment.
Fig. 2 illustrates an example of annotations to indicate metrics according to an embodiment.
Fig. 3 illustrates a trail according to another embodiment.
Fig. 4 illustrates analyzing employee data based on multiple metrics according to one embodiment.
Fig. 5 illustrates displaying multiple employees according to an embodiment.
Fig. 6 illustrates a method of analyzing employee data over time according to an embodiment.
Fig. 7 illustrates another example of analyzing employee data according to an embodiment.
Fig. 8 illustrates navigation between points in a timeline according to an embodiment.
Fig. 9 illustrates movement of a group of employees according to an embodiment.
Fig. 10 illustrates an application including a talent history component on a mobile computing device according to one embodiment.
Fig. 11 illustrates hardware of a special purpose computing machine configured with a process according to the above disclosure.

### DETAILED DESCRIPTION

Described herein are techniques for displaying and analyzing employee history over time. The apparatuses, methods, and techniques described below may be implemented as a computer program (software) executing on one or more computers. The computer program may further be stored on a tangible non-transitory computer readable medium, such as a memory or disk, for example. A computer readable medium may include instructions for performing the processes described below. In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

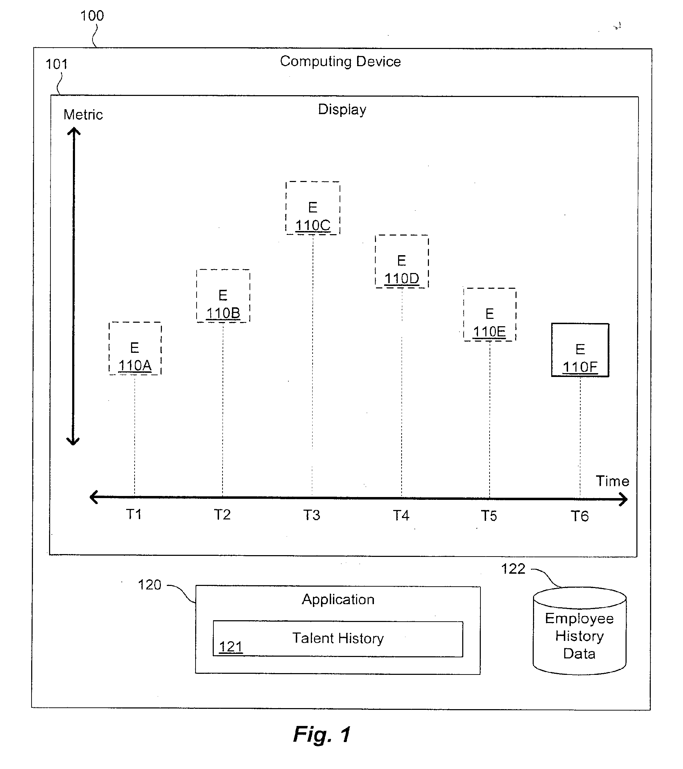

Fig. 1 illustrates displaying talent history according to one embodiment. Fig. 1 shows a computing device 100 including a display 101 for displaying graphical components representing employees. Historical data about an employee may be stored in a data store 122 (e.g., a database). The employee data may include a variety of metrics relating to employee performance or potential, for example, that may correspond to particular time points (e.g., Jan 2010 Performance Score). Computing device 100 may execute an application 120, which may include a talent history component 121 for performing the techniques described herein, for example. In one embodiment, talent history component 121 may access employee data in data store 122 across a plurality of time points and display the data in an animated manner as described herein.

For example, employee data in data store 122 may include a particular metric that has different values at different points of time. For instance, a performance review may be conducted each year, and every year an employee is given a score. Each score each year may be stored with a time stamp with the employee's data, for example. Referring to Fig. 1, a graphical component 110 is displayed to a user. The position of the graphical component is dependent on the value of the metric. In this example, the metric forms a y-axis and time forms an x-axis (although in other examples shown below, another metric may be on the x-axis). The graphical component represents a particular employee, and may be a profile picture of the employee, for example.

The graphical component may animate across the timeline from time point T1 to time point T6, for example. In this example, as the graphical component animates over time, a trail is left behind, which in this case includes a plurality of images of the graphical component at a plurality of time points between the first time point T1 and the second time point T6, for example. In particular, graphical component 110 is initially displayed as shown at 110A and moves in an animated manner to positions shown at 110B, 110C, 110D, 110E, and finally 110F. As the graphical component 110 moves from one time point to the next, it leaves behind an image (e.g., a shadow illustrated by dashed lines). Thus, after the animation, the graphical component is displayed at the final time point and a trail of images shows where the graphical component was positioned (based on the metric) at previous time points. If the graphical component is positioned based on a metric measuring performance, then the trail shows the employee's performance over time.

In one embodiment, a user may select one of the images or time points to obtain more information about an employee. For example, the computing device may receive and process a selection from a user (e.g., touch or mouse click) of an image on the trail (e.g., 110B) or a corresponding time point (e.g., T2). Accordingly, the device displays employee data at a particular point in time corresponding to the point selected by the user. For instance, if a user selects image 110B or time T2 on the timeline, data about the employee at time T2 maybe displayed (e.g., as a popup, annotation, or overlay). Some embodiments may associate specified employee data with particular fields that are displayed when a user selects them, for example. Accordingly, features and advantages of the present invention allow users to view an employee's metrics over time and view additional specified data about the employee by selecting the images or the graphical component (e.g., component 110F at T6).

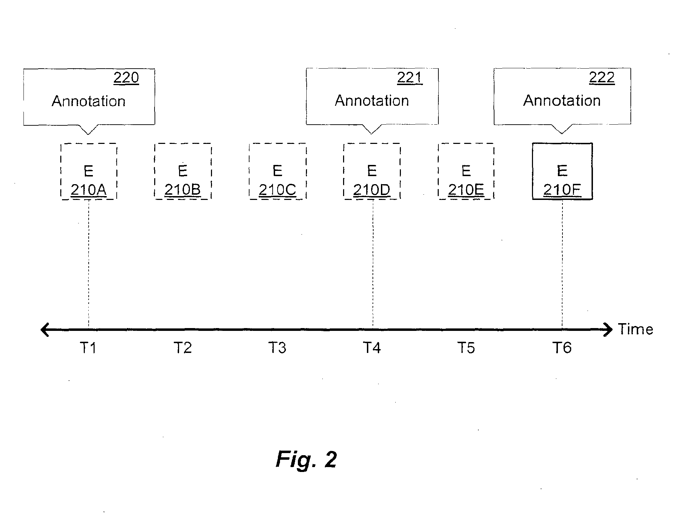

Fig. 2 illustrates an example of annotations to indicate metrics according to an embodiment. As mentioned above, employee metrics may be indicated at different time points. In this example, a graphical component representing an employee animates from time point T1 to time point T6. At each time point, an annotation may be displayed to indicate one or more metrics for the employee. In this example, the graphical component animates over time points T1-T6 as illustrated at 210A-F. At each point, for example, an annotation may appear showing one or more metrics for the employee at that particular time. In this example, when the graphical component is displayed at 210A, annotation 220 is also displayed to show the metric at time T1. Similarly, when graphical components 210D and 210F are displayed during the animation, annotations 221 and 222, respectively, are also displayed to show the metric at times T4 and T6. Alternatively, values or other indications of the metric may be displayed in each annotation as it appears. In some embodiments, the annotations may be included in the graphical components themselves, for example. After the animation, images of the graphical component may be displayed in a trail as described above. A user may select one of the images or a time point to redisplay the annotation and/or access additional information about the employee, for example.

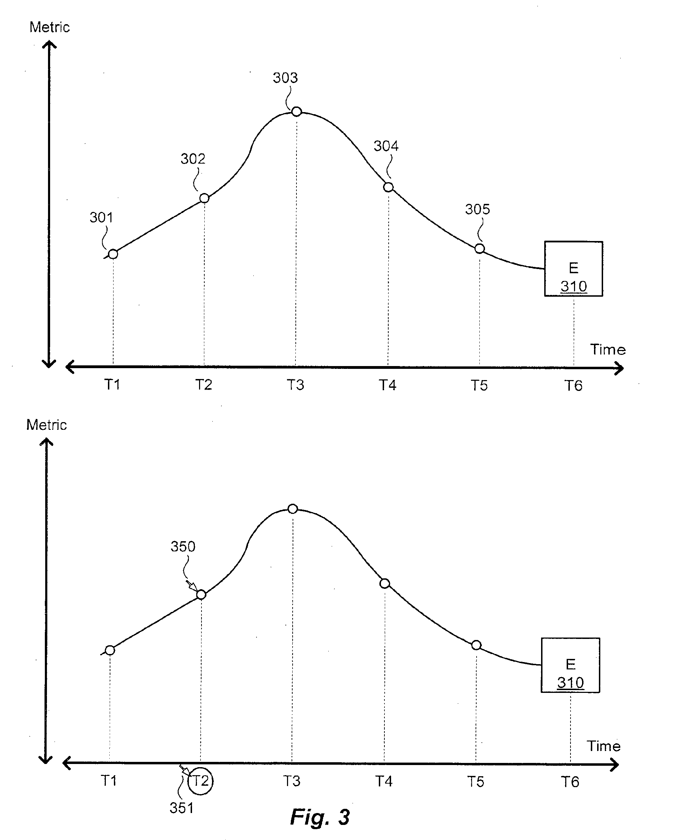

Fig. 3 illustrates a trail according to another embodiment. In this example, animation of a graphical component 310 leaves a solid line trail 390 between a plurality of markers (e.g., circles) 301-305 at particular time points T1-T6. In this example, the animation of graphical component 310 may start at position 301 and move over time along the path shown by solid line 390 to markers 301-305. A user may select the marker at 350 or a point on the timeline at 351 to access employee data corresponding to that point in time. For example, if the user selects time T2 or marker 302, more information about the employee may be presented.

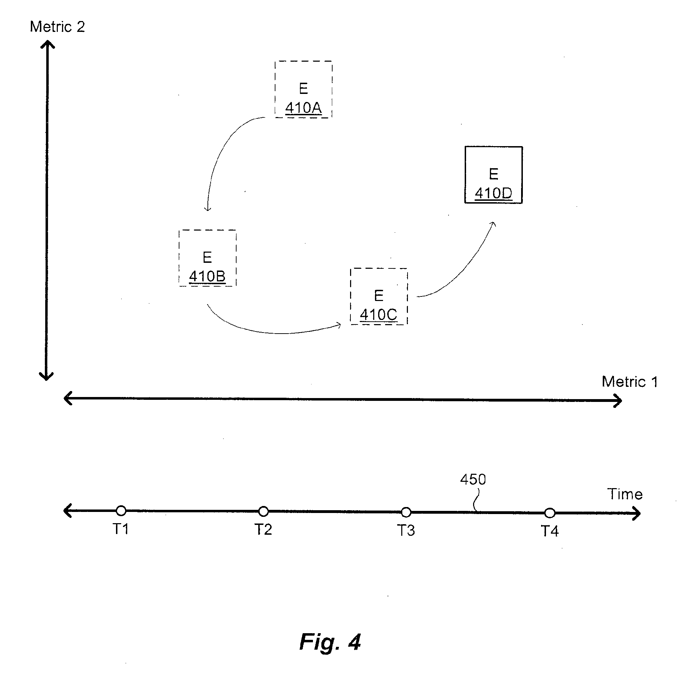

Fig. 4 illustrates analyzing employee data based on multiple metrics according to one embodiment. In this embodiment, graphical components change position along a first axis based on a value of one metric in the employee data, and the graphical components change position along a second axis based on a value of a second metric in the employee data. For example, each employee data record in a database may have fields storing different metrics at different times, such as performance and potential ratings established once per year or once per quarter. In this case, the employee metrics are indicated at different time points by displaying graphical components representing an employee in different locations on the screen, where one metric (Metric 1) determines the location of the graphical component along the x-axis and the other metric (Metric 2) determines the location of the graphical component along the y-axis. For example, graphical components may animate from 410A through 410D over time points T1-T4. In particular, at time T1, a graphical component 410A representing an employee may be displayed based on the values of Metric 1 and Metric 2 in the employee data. At time T2, the metric values may have changed, thus changing the position as shown by graphical component 410B. Similarly, graphical components 410C and 410D show the values of Metric 1 and Metric 2 at times T3 and T4, respectively. As above, the animation leaves a trail of images shown by dashed lines. A user may select time points T1-T4 on timeline 450 or the images to obtain data about the employee at a particular time point, for example.

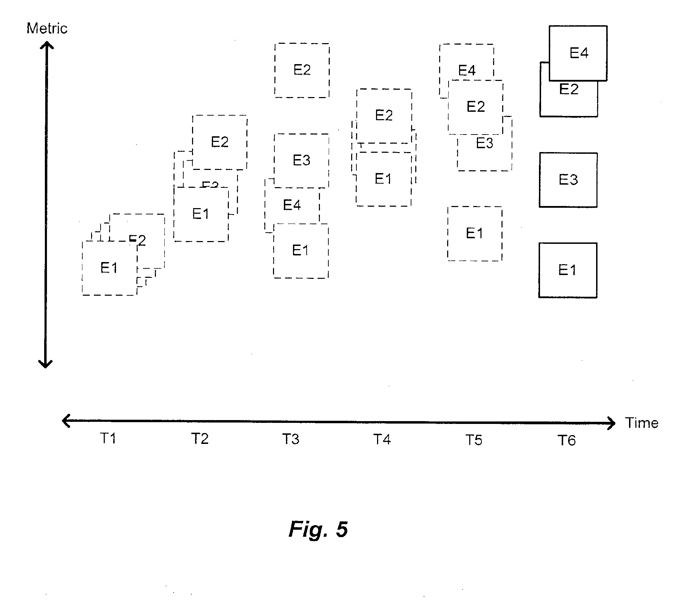

Fig. 5 illustrates displaying multiple employees according to an embodiment. In this example, multiple graphical components each representing a different employee are displayed and animated over times T1-T6. In this example, 4 graphical components representing 4 different employees are displayed and animated across times T1-T6 with the positions at each time point based on a single metric. In this example, a user may view the employment data for different time points by selecting the trail images, for example. In another embodiment described in more detail below, multiple graphical components representing multiple employees, and associated with different employee data, may be animated over time against two metrics (e.g., two dimensions). Additional dimensions may be used in yet other embodiments.

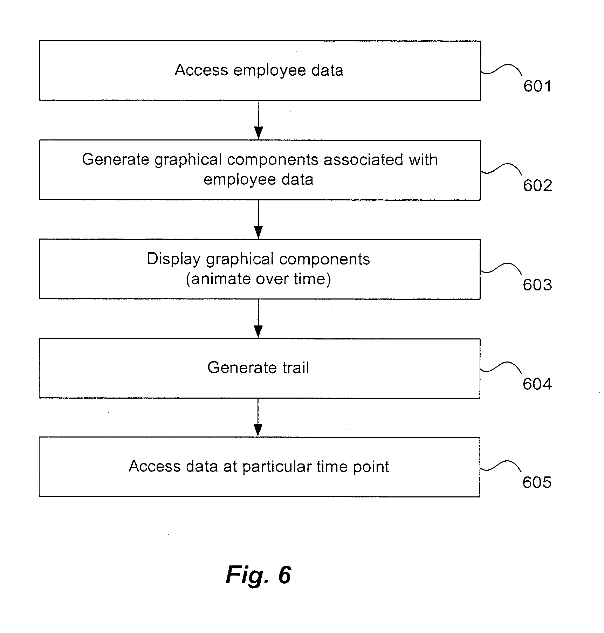

Fig. 6 illustrates a method of analyzing employee data over time according to an embodiment. At 601, a computing device access employee data. The employee data may include one or more employee metrics at multiple time points, for example. At 602, graphical components are generated. Graphical components may represent an employee, such as an icon of a profile picture, for example, and may be used to access employee data for the particular employee from a database or other data store, for example. At 603, one or more graphical components are displayed. The graphical components may be animated in the display so that they change position between corresponding points of a timeline, for example. At particular points in time, the position of the graphical component may change based on a metric in the employee data. At 604, a trail is generated. As the graphical component moves from location to location in the display during the animation, a trail may be generated indicating the past positions of the graphical component at particular times. At 605, a user may access data at a particular point in time, for example, by selecting a point on a timeline or an image in the trail. When a user selects one of the images, or the final position of the graphical component in the display, the system may receive and process the selection and access employment data for the user at the particular time point corresponding to the item selected. In one embodiment, a query is generated and the time point may be automatically included as a parameter for the query, for example. Data for the employee may be retrieved from a database and presented to a user in the display for deeper insight into the employee's history.

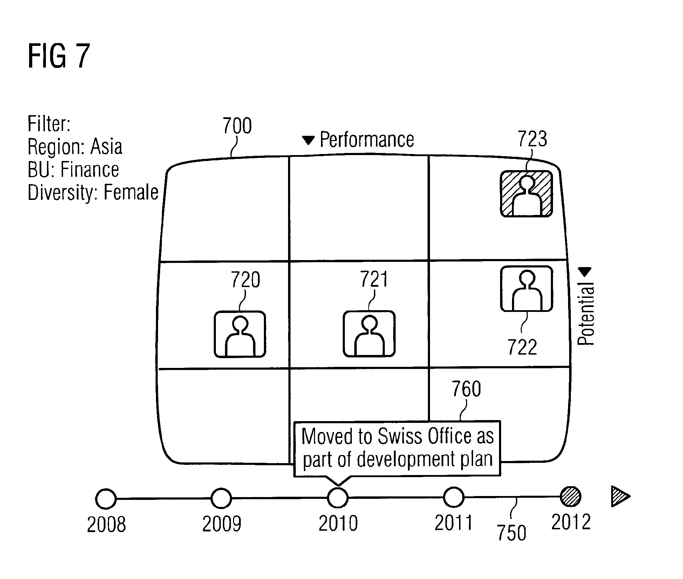

Fig. 7 illustrates another example of analyzing employee data according to an embodiment. In this example, a graphical component representing an employee is animated in a two-dimensional array across a series of four (4) discrete time points for the years 2008-2012 on timeline 750. The metrics for the array are "Performance" on the x-axis and "Potential" on the y-axis of a performance matrix 700. These values may be numerical scores, for example, which may be used to establish the position of the graphical component in the array at each time point. For example, if an individual's performance and potential scores change in the "Performance and Potential Matrix" over the years, the movement is visualized by animation in the matrix while leaving a trail behind to help the viewer see the history. The timeline also moves in synch to indicate the passing of time. Comments can be inserted to add commentary to explain the context of the move at different points in time. As this example shows, embodiments may include a filter function, where a user enters a variety of filter criteria and the system may retrieve employees meeting the query and displaying employee data as described here. As the graphical component animates from a first location 720 at time 2008, to subsequent locations 721, 722, and finally 723 at times 2009, 2011, and 2012, respectively, it leaves a trail of images. In this example, an annotation 760 for 2010 explains missing data for a particular year. For example, the text "Moved to Swiss Office as part of development plan" may be associated with a time stamp 2010, indicating that there is no corresponding image for the time point 2010.

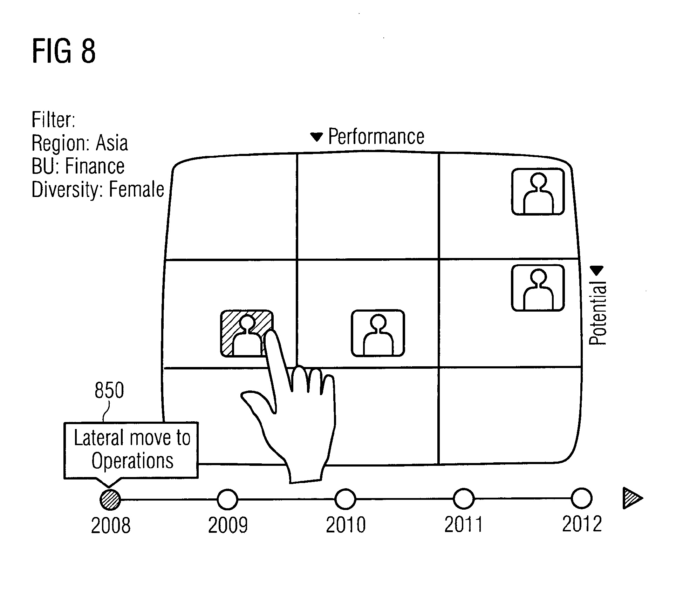

Fig. 8 illustrates navigation between points in a timeline according to an embodiment. In this example, a user can navigate back and forth in time by tapping (touchscreen) or clicking (mouse pointer) on the timeline or the employee's trail to see additional comments. A user may select a particular image or time point, for example, to bring up further employee data, which may be specific to the particular time point as illustrated at 850. Configuration parameters may specify which data in an employee record is displayed when the user selects particular time points or images, for example.

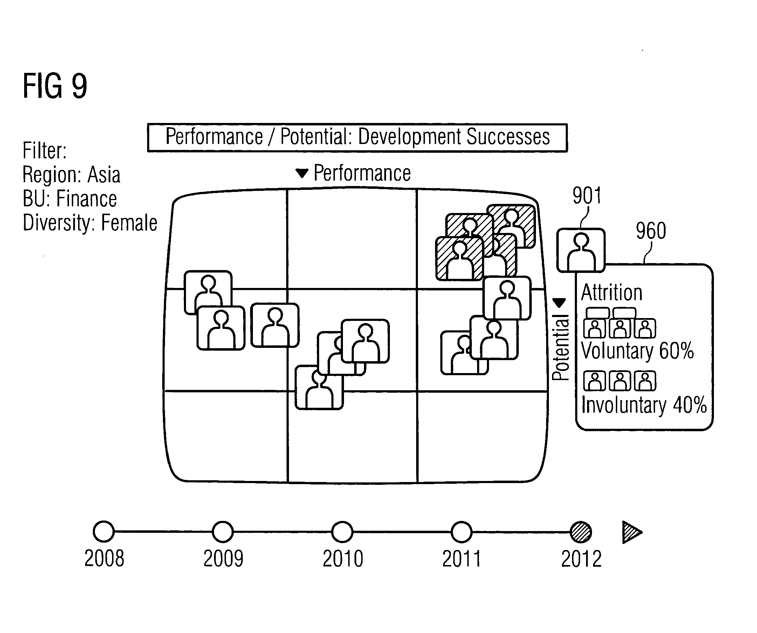

Fig. 9 illustrates movement of a group of employees according to an embodiment. As mentioned above, a group of individuals may also be animated to show movement overtime with trails left behind to aid comprehension. In this example, a filter may return a group of employees in a cohort. A group of corresponding graphical components is animated between different positions in the performance matrix over the time points 2008-2012. In this example, graphical components (e.g., 901) may animate into or out of the matrix based on attrition or growth. For instance, if an employee leaves the organization during the time period 2008 to 2012, then one of the graphical components 901 animates out of the matrix to the attrition field 960. The attrition may have been voluntary or involuntary, for example. Another icon is added to the attrition field under one of voluntary or involuntary headings depending on which of the two reasons is reflected in the particular employee's data. A similar mechanism may be used to show growth as employees join the organization over the time period.

### EXAMPLE HARDWARE

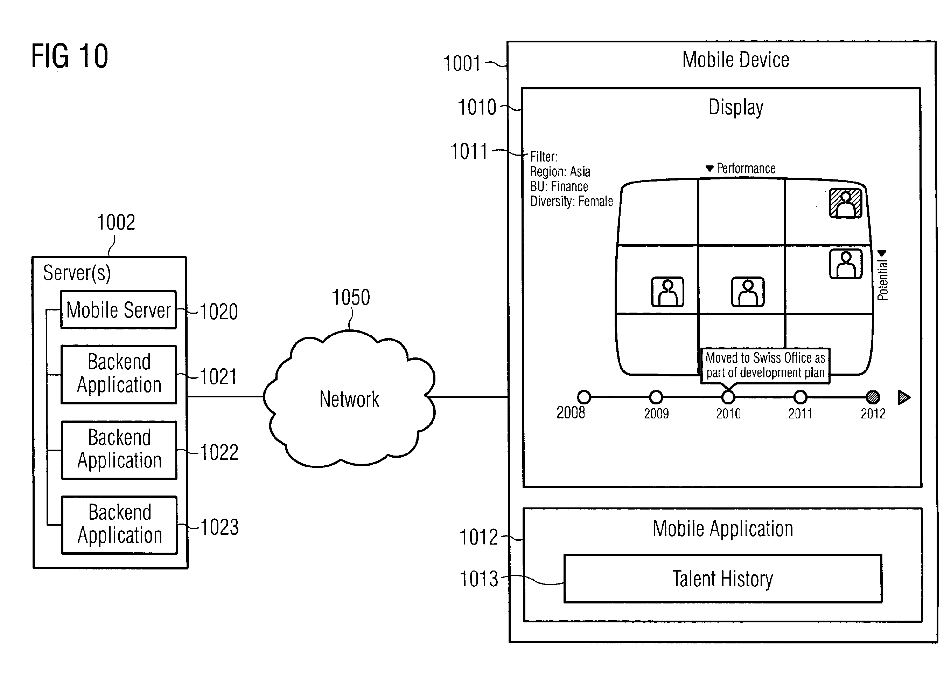

Fig. 10 illustrates an application including a talent history component on a mobile computing device according to one embodiment. As illustrated in Fig. 10, a mobile computing device 1001 (or just, "mobile device") executes a mobile application 1012. Mobile device 1001 may be a mobile phone, such as a smartphone, or a tablet computer, for example. Such mobile devices may include one or more processors and memory for storing instructions to perform a wide variety of features and functions, including the features described herein. For example, mobile application 1012 may include a talent history 1013 component for displaying and analyzing employee data. Application 1012 may display and animate employee data over time points as illustrated at 1011 and as described above. Mobile device 1001 may connect to other remote systems such as one or more servers 1002 over a network 1050, for example. Network 1050 is illustrative of one or more networks for communicating information with other computer systems, such as a cellular communication network, an Ethernet network, the Internet, or a wireless network, for example. Mobile application 1012 executing on mobile device 1001 may receive and send data from one or more remote systems or from a user via a user interface including display 1010, for example. In this example, mobile application 1012 may communicate with a mobile server 1020. Mobile server 1020, in turn, may act as an interface between mobile application 1012 and backend applications 1021-1023.

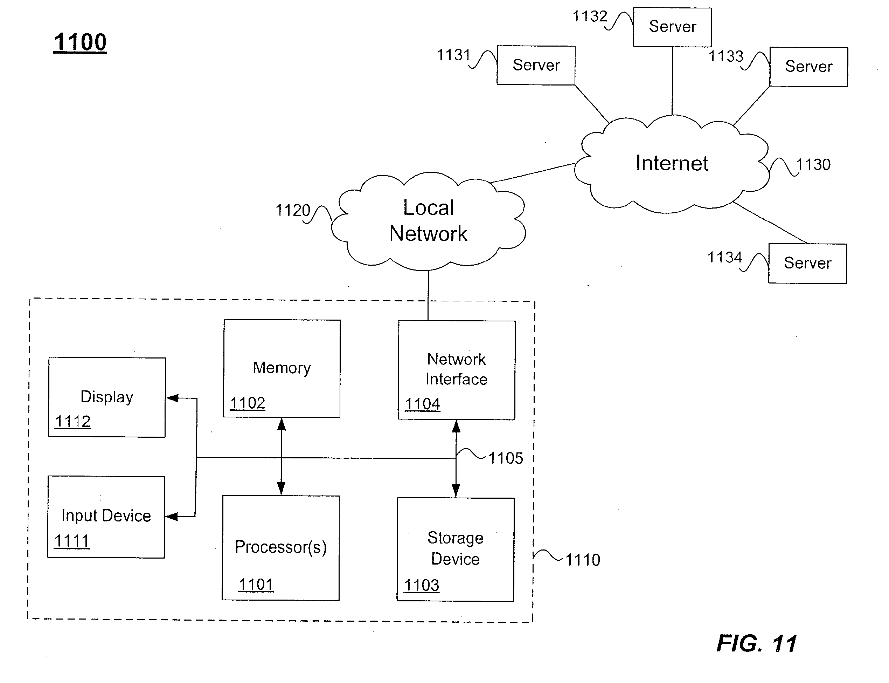

Fig. 11 illustrates hardware of a special purpose computing machine configured with a process according to the above disclosure. The following hardware description is merely one example. It is to be understood that a variety of computer topologies may be used to implement the above described techniques. An example computer system 1110 is illustrated in Fig. 11. Computer system 1110 includes a bus 1105 or other communication mechanism for communicating information, and one or more processor(s) 1101 coupled with bus 1105 for processing information. Computer system 1110 also includes a memory 1102 coupled to bus 1105 for storing information and instructions to be executed by processor 1101, including information and instructions for performing some of the techniques described above, for example. This memory may also be used for storing programs executed by processor 1101. Possible implementations of this memory may be, but are not limited to, random access memory (RAM), read only memory (ROM), or both. A storage device 1103 is also provided for storing information and instructions. Common forms of storage devices include, for example, a hard drive, a magnetic disk, an optical disk, a CD-ROM, a DVD, a flash or other non-volatile memory, a USB memory card, or any other medium from which a computer can read. Storage device 1103 may include source code, binary code, or software files for performing the techniques above, for example. Storage device and memory are both examples of non-transitory computer readable storage mediums.

Computer system 1110 may be coupled via bus 1105 to a display 1112 for displaying information to a computer user. An input device 1111 such as a keyboard, touchscreen, and/or mouse is coupled to bus 1105 for communicating information and command selections from the user to processor 1101. The combination of these components allows the user to communicate with the system. Bus 1105 may represent multiple specialized buses and digital communication channels, for example.

Computer system 1110 also includes a network interface 1104 coupled with bus 1105. Network interface 1104 may provide two-way data communication between computer system 1110 and a local network 1120. The network interface 1104 may be a wireless or wired connection, for example. Computer system 1110 can send and receive information through the network interface 1104 across a local area network, an Intranet, a cellular network, or the Internet, for example. One example implementation may include talent history program code executing on a computing system 1110 as described above. In the Internet example, a talent history component, for example, may access data on backend systems that may reside on multiple different hardware servers 1131-1135 across the network. Servers 1131-1135 and server applications may also reside in a cloud computing environment, for example.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A method comprising:
accessing, by a computing device, employee data, wherein the employee data comprises one or more employee metrics at a plurality of time points; and
displaying, by the computing device, a graphical component representing an employee, said displaying comprising animating the graphical component across a timeline from a first time point to a second time point, wherein said animating displays a trail across the timeline showing the movement of the graphical component over time, and wherein at least one employee metric is indicated at a plurality of time points.

2. The method of claim 1 wherein the trail comprises a plurality of images of the graphical component at a plurality of time points between the first time point and the second time point.

3. The method of claims 1 or 2 wherein the graphical component changes position based on a value of the at least one metric.

4. The method of claim 3 wherein the graphical component changes position along a first axis based on the value of the at least one metric and the graphical component changes position along a second axis based on a value of a second metric.

5. The method of any one of claims 1 to 4 wherein the at least one employee metric is displayed in an annotation associated with the graphical component at the plurality of time points.

6. The method of any one of claims 1 to 5 wherein said displaying, by the computing device, comprises displaying multiple graphical components each representing a different employee.

7. The method of any one of claims 1 to 6 further comprising receiving a selection from a user of a point on said trail, and in accordance therewith, displaying employee data for a time point corresponding to the point on said trail selected by the user.

8. A computer system comprising:
a processor; and
a non-transitory computer readable medium having stored thereon one or more programs, which when executed by the processor, causes the processor to:
access employee data, wherein the employee data comprises one or more employee metrics at a plurality of time points; and
display a graphical component representing an employee comprising animating the graphical component across a timeline from a first time point to a second time point, wherein said animating displays a trail across the timeline showing the movement of the graphical component over time, and wherein at least one employee metric is indicated at a plurality of time points.

9. The computer system of claim 8 wherein the trail comprises a plurality of images of the graphical component at a plurality of time points between the first time point and the second time point.

10. The computer system of claims 8 or 9 wherein the graphical component changes position based on a value of the at least one metric.

11. The computer system of claim 10 wherein the graphical component changes position along a first axis based on the value of the at least one metric and the graphical component changes position along a second axis based on a value of a second metric.

12. The computer system of any one of claims 8 to 11 wherein the at least one employee metric is displayed in an annotation associated with the graphical component at the plurality of time points.

13. The computer system of any one of claims 8 to 12 wherein the programs further cause the processor to process a selection from a user of a point on said trail, and in accordance therewith, display employee data for a time point corresponding to the point on said trail selected by the user.

14. A non-transitory computer readable storage medium storing one or more programs, the one or more programs comprising instructions that, when executed by at least one programmable processor, cause the at least one programmable processor to perform operations in accordance with a method of any one of claims 1 to 6.

15. The non-transitory computer readable storage medium of claim 14 wherein the one or more programs further comprise instruction for processing a selection from a user of a point on said trail, and in accordance therewith, displaying employee data for a time point corresponding to the point on said trail selected by the user.
